# EUROPÄISCHE PATENTSCHRIFT

(11) **EP 2 762 741 B1**
(45) Veröffentlichungstag und Bekanntmachung des Hinweises auf die Patenterteilung: **11.07.2018**
(21) Anmeldenummer: 14150206.2
(22) Anmeldetag: 06.01.2014
(51) Int. Cl.: F16D 3/72

(54) **Membrankupplung**
Membrane coupling
Accouplement à membrane

(30) Priorität: 30.01.2013 DE 102013100946
(43) Veröffentlichungstag der Anmeldung: 06.08.2014
(73) Patentinhaber: Technische Universität Darmstadt, 64289 Darmstadt (DE)
(72) Erfinder: Schürmann, Helmut, 67133 Maxdorf (DE); Höring, Barbara, 61462 Königstein (DE)
(74) Vertreter: Katscher Habermann Patentanwälte

(56) Entgegenhaltungen:
- EP-A1- 0 064 151
- EP-A2- 0 534 925
- WO-A1-96/15385
- DE-U1- 8 514 523

## Beschreibung

Die Erfindung betrifft eine Membrankupplung zur Übertragung eines Drehmoments und zum Ausgleichen eines Axial-, Radial- und/oder Winkelversatzes zwischen An- und Abtriebselementen mit einer rohrförmigen Nabe und mit einer stirnseitig anschließenden Membranscheibe, wobei die Nabe und die Membranscheibe aus einem faserverstärkten Kunststoffmaterial bestehen und wobei an der Membranscheibe radial beabstandet von der Nabe und von einer Außenumfangskante mindestens ein Verstärkungselement angeordnet ist.

Membrankupplungen werden in verschiedenen Bereichen der Antriebstechnik oftmals eingesetzt, um möglichst hohe Drehmomente zwischen Antriebselementen und Abtriebselementen übertragen zu können, die einen axialen Versatz, einen radialen Versatz oder einen Winkelversatz aufweisen können. Bereits bei der Montage der einzelnen An- oder Abtriebselemente kann oftmals eine geringfügige Abweichung von der idealen Ausrichtung relativ zueinander nicht ausgeschlossen werden. Insbesondere bei einer Belastung der An- und Abtriebselemente durch ein zu übertragendes Drehmoment lässt sich ein axialer oder radialer Versatz oder ein Winkelversatz zwischen benachbarten Antriebs- oder Abtriebselementen kaum vermeiden. Die einzelnen An- oder Abtriebselemente können auch durch Schwingungen und radial einwirkende Belastungen in einem Übergangsbereich die Lage und Ausrichtung relativ zueinander dynamisch verändern. Ein während des Betriebs unvermeidbarer Versatz benachbarter An- und Abtriebselemente muss durch geeignete Membrankupplungen über eine möglichst lange Betriebsdauer ausgeglichen werden können.

Es ist erstrebenswert, dass die Membrankupplungen eine möglichst geringe Wanddicke der Membranscheibe aufweisen, um möglichst biegeweich zu sein und einen möglichst belastungsfreien Ausgleich von axialen Relativbewegungen zueinander und Winkeldifferenzen der mit der Membrankupplung verbundenen Antriebs- oder Abtriebselemente gewährleisten zu können.

Eine dünne Membranscheibe weist allerdings nicht nur eine vorteilhaft geringe Biegesteifigkeit, sondern auch eine geringe Beulsteifigkeit auf, wodurch das maximal übertragbare Drehmoment begrenzt wird. Eine geringe Beulsteifigkeit kann bei übermäßiger Belastung zu einem schlagartigen Versagen der Membrankupplung führen.

Aus diesem Grund werden Membrankupplungen üblicherweise so ausgelegt, dass möglichst zuverlässig eine ausreichende Beulsteifigkeit gewährleistet wird, wobei als notwendigerweise damit einhergehende Konsequenz eine vergleichsweise große Masse der Membrankupplung und eine höhere Biegesteifigkeit als erforderlich in Kauf genommen werden.

Während ältere Membrankupplungen üblicherweise aus Metall hergestellt sind, belegen zahlreiche neuere Entwicklungen, dass auch Membrankupplungen aus einem geeigneten Faser-Kunststoff-Verbundmaterial die Anforderungen an das zu übertragende Drehmoment und den Ausgleich des erwarteten Axial- und Winkelversatzes erfüllen können. Membrankupplungen aus einem Faser-Kunststoff-Verbundmaterial haben gegenüber Membrankupplungen aus Metall zudem den Vorteil eines geringen Eigengewichts und einer damit einhergehend geringeren trägen Masse.

Aus US 7,568,976 B2 ist eine Membrankupplung bekannt, bei der die Nabe und mehrere Flanschanschlüsse der Membrankupplung aus Metallhülsen bestehen, die über eine Membranscheibe aus einem faserverstärkten Kunststoffmaterial miteinander verbunden sind. Die Verbindung der Metallbuchsen mit dem Kunststoffmaterial erfordert einen vergleichsweise hohen Herstellungsaufwand.

Aus EP 064 151 A1 ist eine Membrankupplung bekannt, bei der sowohl die Nabe als auch die Membranscheibe aus einem faserverstärkten Kunststoffmaterial bestehen. Die Membrankupplung ist durch eine geschickte Anordnung von Prepregs hergestellt worden, die anschließend in einem Werkzeug miteinander verpresst wurden.

Auch aus EP 534 927 B1 ist eine Membrankupplung aus einem faserverstärkten Kunststoffmaterial bekannt.

Diese und andere aus der Praxis bekannten Membrankupplungen weisen trotz eines oftmals hohen Eigengewichts eine vergleichsweise geringe Beulsteifigkeit auf, so dass das maximal übertragbare Drehmoment im Verhältnis zu dem Eigengewicht der Membrankupplung vergleichsweise gering ist.

In den Druckschriften DE 85 14 523 U1, WO 1996/015385 A1 und EP 0 534 925 A2 wird jeweils eine Membrankupplung aus einem faserverstärkten Kunststoffmaterial beschrieben, die zur Verbesserung der Steifigkeit und Festigkeit der Membrankupplung eine wellenförmige Profilierung als Verstärkungselement aufweisen. Eine wellenförmige Profilierung bedingt einen hohen Herstellungsaufwand und ist oftmals durch Vorgaben des maximal nutzbaren Bauraums begrenzt.

Es wird deshalb als eine Aufgabe der vorliegenden Erfindung angesehen, eine Membrankupplung der eingangsgenannten Gattung so auszugestalten, dass trotz eines möglichst geringen Eigengewichts ein möglichst hohes Drehmoment übertragen werden kann und gleichzeitig ein großer Ausgleich eines Axial-, Radial- und/oder Winkelversatzes gewährleistet werden kann. Zudem soll die Membrankupplung vorteilhafte Dämpfungseigenschaften aufweisen.

Diese Aufgabe wird erfindungsgemäß dadurch gelöst, dass das Verstärkungselement eine ringförmige Verdickung der Membranscheibe ist. Eine ringförmige Verdickung ist rotationssymmetrisch und ermöglicht deshalb auch bei hohen Drehzahlen eine gleichmäßige Belastung der Membrankupplung. Eine ringförmige Verdickung lässt sich in einfacher Weise präzise herstellen. Durch die ringförmige Verdickung, die radial in einem mittleren Bereich zwischen der Nabe und dem äußeren Rand angeordnet ist, wird die für ein Verbeulen unter Belastung zur Verfügung stehende Fläche der Membranscheibe bzw. deren Radius in mindestens zwei Abschnitte unterteilt und dadurch jeweils reduziert. Zudem wird in dem Bereich und in der der Umgebung des Verstärkungselements die Beulsteifigkeit der Membranscheibe erhöht. Auf diese Weise kann die Membranscheibe wesentlich dünner als bei einer Membranscheibe ohne ein zusätzliches Verstärkungselement ausgestaltet werden und das Eigengewicht der Membrankupplung reduziert werden. Durch die ringförmige Verdickung wird die Beulsteifigkeit der Membranscheibe erheblich erhöht, ohne das Eigengewicht deutlich zu vergrößern oder die Biegesteifigkeit der Membrankupplung übermäßig herabzusetzen.

Die mindestens eine ringförmige Verdickung kann zweckmäßigerweise etwa in der Mitte zwischen der Nabe und dem äußeren Rand der Membranscheibe, beziehungsweise der Außenumfangskante angeordnet sein. In diesem mittleren Bereich tritt üblicherweise keine oder nur sehr geringe Biegebeanspruchung der Membranscheibe auf, sodass die Biegesteifigkeit durch das in diesem mittleren Bereich angeordnete Verstärkungselement nicht merklich beeinflusst oder erhöht wird.

Es ist ebenfalls denkbar und für verschiedene Anwendungsfälle vorteilhaft, dass das mindestens eine Verstärkungselement etwas näher an der Nabe oder aber weiter außen etwas näher an der Außenumfangskante angeordnet ist. Die Biegesteifigkeit und die Beulsteifigkeit der Membrankupplung können auf diese Weise beeinflusst werden.

Um die Beulsteifigkeit zu erhöhen kann vorgesehen sein, dass auf beiden Seiten der Membranscheibe jeweils mindestens eine ringförmige Verdickung ausgebildet ist. Die ringförmigen Verdickungen können auf beiden Seiten der Membranscheibe einen identischen Radialabstand zur Nabe aufweisen. Es ist ebenfalls denkbar, dass die ringförmigen Verdickungen auf den gegenüberliegenden Seiten der Membranscheibe jeweils einen unterschiedlichen Radialabstand zur Nabe, beziehungsweise zu der Außenumfangskante der Membranscheibe aufweisen. Die Beulsteifigkeit kann dadurch mit geringem Materialaufwand ganz erheblich erhöht werden.

Es hat sich gezeigt, dass durch eine geeignete Ausgestaltung der Membranscheibe bereits eine Membranscheibe mit geringer Masse, beziehungsweise eine dünne Membranscheibe aus einem faserverstärkten Kunststoffmaterial ausreicht, um ein hohes Drehmoment übertragen zu können. Durch die ringförmige Verdickung wird auch bei vergleichsweise dünnen Membranscheiben die Beulsteifigkeit derart erhöht, dass Membrankupplungen mit einem sehr geringen Eigengewicht die jeweiligen Anforderungen an die Biegesteifigkeit, die Momentenfestigkeit und die Beulsteifigkeit erfüllen können.

Auch durch die Auswahl und Anordnung der insbesondere in der Membranscheibe angeordneten Fasern kann auf die Beulsteifigkeit und auf die Dämpfungseigenschaften der Membrankupplung Einfluss genommen werden. Im Hinblick auf eine möglichst hohe Beulsteifigkeit und ein großes übertragbares Drehmoment bei gleichzeitig einem geringen Eigengewicht der Membrankupplung ist es vorteilhaft, wenn Kohlenstofffasern in das Kunststoff-Matrixmaterial eingelagert sind. Durch die Einlagerung von Glasfasern können Herstellungskosten reduziert und vor allem die Dämpfungseigenschaften verbessert werden.

Vorzugsweise ist vorgesehen, dass die Membranscheibe einen kohlenstofffaserverstärkten Innenbereich und einen glasfaserverstärkten Außenbereich aufweist. Der für die Beulsteifigkeit und das übertragbare Drehmoment besonders wichtige Innenbereich ist überwiegend oder vollständig mit Kohlenstofffasern verstärkt, während der für die Dämpfungseigenschaften wichtige Außenbereich mit Glasfasern verstärkt ist. Im Hinblick auf möglichst geringe Herstellungskosten kann es zweckmäßig sein, in die Membranscheibe ausschließlich Verstärkungsfasern aus einem einheitlichen Material einzubetten. Gegebenenfalls kann der Anteil der Verstärkungsfasern pro Volumeneinheit an die üblicherweise erwarteten Belastungen innerhalb der Membranscheibe angepasst werden. Es ist ebenfalls denkbar, großflächig eine erste Sorte von Verstärkungsfasern in das Kunststoff-Matrixmaterial einzubetten und nur bereichsweise eine zweite Sorte von Verstärkungsfasern zusätzlich einzubringen.

Gemäß einer Ausgestaltung des Erfindungsgedankens ist vorgesehen, dass in der Membranscheibe momentenübertragende Fasern eingelagert sind, die eine Orientierung von näherungsweise 45° zu einer Radiuslinie aufweisen. Bei einer Membranscheibe, bei der die momentenübertragenden Fasern symmetrisch relativ zur Radiuslinie angeordnet sind, ist das maximal übertragbare Drehmoment unabhängig von der jeweiligen Drehrichtung.

Sollte bei dem vorgesehenen Verwendungszweck der Membrankupplung eine Drehrichtung bevorzugt sein, in der ein höheres Drehmoment übertragen werden können soll, kann die Orientierung der momentenübertragenden Fasern drehrichtungsabhängig optimiert werden, sodass auch eine andere und insbesondere eine unsymmetrische Orientierung der momentenübertragenden Fasern relativ zu der Radiuslinie denkbar ist.

Im Hinblick auf möglichst gute Dämpfungseigenschaften ist vorgesehen, dass in der Membranscheibe Fasern eingelagert sind, deren Ausrichtung deutlich von einer für die Momentenübertragung bevorzugten Orientierung von näherungsweise 45° zu einer Radiuslinie abweicht. Falls die Faserausrichtung von der dominanten Kraft- und Momentenübertragungsrichtung abweicht, werden die Kräfte und Momente, aber auch Stöße und Impulse im Wesentlichen durch das deutlich elastischere Kunststoff-Matrixmaterial und nicht entlang der Fasern übertragen, so dass eine stärkere Dämpfung stattfindet.

Natürlich können auch momentenübertragende Fasern und abweichend ausgerichtete Fasern in einigen Bereichen oder in allen Bereichen der Membranscheibe übereinander angeordnet oder miteinander verwoben sein.

Es kann auch vorgesehen sein, dass in der Membranscheibe zumindest ein überwiegender Anteil von Fasern eingelagert ist, die eine Orientierung zwischen 45° und 90° zu einer Radiallinie aufweisen. Durch die Vorgabe der Orientierung der Fasern kann sowohl auf die Wirkung der momentenübertragenden Eigenschaften der betreffenden Fasern als auch auf die Wirkung der dämpfenden Eigenschaften des Kunststoff-Matrixmaterials Einfluss genommen werden. Die Ausrichtung und die jeweiligen Anteile der so ausgerichteten Fasern können für jeden einzelnen Anwendungsfall optimiert und vorgegeben werden. In vielen Fällen wird eine Orientierung in einem Winkel von mehr als 45° und deutlich weniger als 90° zu einer Radiallinie zweckmäßig sein.

Die vorteilhafte Beeinflussung der Biegesteifigkeit, des maximal übertragbaren Drehmoments und der Dämpfungseigenschaften durch die Auswahl und Ausrichtung der einzelnen Fasern in dem Faser-Kunststoff-VerbundMaterial, aus dem die Membrankupplung besteht, kann auch unabhängig von der Anordnung eines Verstärkungselements oder der ringförmigen Verdickungen bei Membrankupplungen vorgesehen sein.

Eine derartige Membrankupplung kann zweckmäßigerweise durch Einlegen und Verpressen von Prepregs in einem Werkzeug hergestellt werden. Die Orientierung der einzelnen Fasern, die in der Kunststoffmatrix eingebettet und angeordnet sind, kann in einfacher Weise dadurch vorgegeben werden, dass die Membranscheibe mehrere zusammengesetzte Kreissektorsegmente aufweist. Innerhalb eines Segments, dessen Formgebung zumindest näherungsweise einem Kreissektorsegment entspricht, ist die Ausrichtung der Fasern üblicherweise identisch, so dass die vorangehend genannte Vorzugsorientierung von 45° oder von einem Winkel zwischen 45° und 90°, beispielsweise von etwa 70° bis 85° jeweils bereichsweise für eine in dem betreffenden Segment verlaufende Radiuslinie definiert ist.

Es ist ebenfalls denkbar und für eine möglichst einfache und zuverlässige Herstellung der Membranscheibe vorteilhaft, wenn die Membranscheibe aus mehreren Lagen von kreisförmigen Prepregs gefertigt wird, die übereinander gestapelt angeordnet sind und jeweils vollflächig eine unidirektionale Ausrichtung der Verstärkungsfasern aufweisen. In jeder einzelnen Lage weisen die Fasern eine identische Ausrichtung auf. Durch eine geeignete Vorgabe der Ausrichtung der Fasern der einzelnen Lagen aus Prepregs relativ zu den Fasern benachbarter Lagen kann eine Membranscheibe hergestellt werden, die in jeder Richtung, bzw. für nahezu beliebige Radiallinien jedenfalls bereichsweise die angestrebte Orientierung der Fasern von zumindest einer Lage aufweist.

Ein Verstärkungselement kann bzw. gegebenenfalls mehrere Verstärkungselemente können in einfacher Weise durch die Anordnung von mehreren zusammengesetzten Ringsegmenten ausgebildet werden.

Es hat sich gezeigt, dass insbesondere bei hohen Drehzahlen eine möglichst gleichmäßige und rotationssymmetrische Formgebung der Membranscheibe besonders vorteilhaft ist. Vorzugsweise ist deshalb vorgesehen, dass die Membranscheibe aus mehreren nahtlos aneinandergefügten Segmenten besteht. Auf diese Weise können lokale Verdickungen oder Ausformungen vermieden werden, wie sie durch teilweise überlappende Segmente erzeugt werden. Eine aufwendige Nachbearbeitung der Membranscheibe ist dann nicht mehr notwendig. Auch bei hohen Drehzahlen entsteht keine Unwucht.

Im Hinblick auf die angestrebten Dämpfungseigenschaften ist vorgesehen, dass die Membranscheibe mindestens ein Dämpfungselement aufweist.

Gemäß einer Ausgestaltung des Erfindungsgedankens ist das Dämpfungselement eine die Membranscheibe bedeckende Dämpfungsscheibe aus einem elastischen Material. Die Dämpfungsscheibe kann auch auf beiden Seiten jeweils von einer Membranscheibe aus einem faserverstärkten Kunststoffmaterial bedeckt sein, um einerseits die Dämpfungsscheibe vor übermäßigen mechanischen Belastungen zu schützen und andererseits eine möglichst einfache Anbindung der Membrankupplung an die in axiale Richtung angrenzenden An- und Abtriebselemente zu erlauben.

Um die Dämpfungswirkung der Dämpfungsscheibe möglichst effektiv ausnutzen zu können ist zweckmäßigerweise vorgesehen, dass ein erstes An- oder Abtriebselement drehmomentübertragend mit einer Membranscheibe auf einer ersten Seite der Dämpfungsscheibe verbunden ist und ein zweites An- oder Abtriebselement drehmomentübertragend auf der gegenüberliegenden Seite der Dämpfungsscheibe festgelegt ist. Auf diese Weise wird erreicht, dass das Drehmoment nicht über ein starres Bauteil, sondern ausschließlich durch Schub- und Zugkräfte übertragen werden kann, die durch die Dämpfungsscheibe hindurch wirken.

Es ist ebenfalls denkbar, dass das Dämpfungselement eine längs eines Umfangs verlaufende Fügeverbindung mit einem elastischen Material ist. Die Membranscheibe kann beispielsweise aus zwei Ringen zusammengesetzt sein, die in radialer Richtung einen ebenfalls ringförmigen Überlappungsbereich aufweisen und mit einem elastischen Klebematerial miteinander verbunden sind. Die elastische Fügeverbindung der beiden Ringe bildet gleichzeitig eine ringförmige Verdickung und damit ein Verstärkungselement. Durch die Auswahl und Mengenvorgabe des elastischen Materials, das beispielsweise als Klebematerial in die Fügeverbindung eingearbeitet ist, können sowohl die Dämpfungseigenschaften als auch die Beulsteifigkeit beeinflusst werden.

Im Hinblick auf eine möglichst feste Verbindung kann vorgesehen sein, dass die Fügeverbindung eine mehrschnittige Verbindung ist. Die Fügeverbindung kann beispielsweise als zweischnittige Verbindung ausgebildet sein, sodass auf beiden Seiten der Membranscheibe jeweils eine ringförmige Ausformung, bzw. Verdickung ausgebildet ist.

Es ist stattdessen oder auch zusätzlich möglich, dass die Membranscheibe durch eine dämpfende Fügeverbindung mit der rohrförmigen Nabe verbunden ist. Ein gesondert hergestelltes rotationssymmetrisches Winkelelement kann in einem ersten Schenkelabschnitt mit der rohrförmigen Nabe und in einem zweiten Schenkelabschnitt mit der Membranscheibe gefügt sein. Durch eine geeignete Materialwahl für das Winkelelement und ein gegebenenfalls verwendetes elastisches Klebematerial können vorteilhafte Dämpfungseigenschaften erzeugt, beziehungsweise begünstigt werden. Eine zweischnittige Verbindung der Membranscheibe mit der rohrförmigen Nabe kann durch die Anordnung von jeweils einem rotationssymmetrischen Winkelelement auf beiden Seiten eines Innenrandes der Membranscheibe und einer Stirnseite der rohrförmigen Nabe erreicht werden.

Die Ausbildung oder Anordnung eines Dämpfungselements an der Membrankupplung kann auch unabhängig von der Anordnung eines Verstärkungselements bzw. der ringförmigen Verdickungen und unabhängig von der Auswahl und Ausrichtung der Verstärkungsfasern bei Membrankupplungen vorgesehen sein.

Auf einen zusätzlich erforderlichen Befestigungsflansch zur Anbindung der Membrankupplung an An- und Abtriebselemente kann verzichtet werden, indem die Membranscheibe längs einer Außenumfangskante Ausnehmungen zum Verbinden mit einem An- oder Abtriebselement aufweist.

Eine Befestigung der rohrförmigen Nabe der Membrankupplung an einer Hohlwelle kann in einfacher Weise dadurch bewerkstelligt werden, dass die Nabe der Membrankupplung lediglich ein geringes Übermaß aufweist und mit verhältnismäßig geringem Druck in axialer Richtung in einen Endbereich der die Nabe umgebenden Hohlwelle eingeschoben wird. Anschließend wird ein Befestigungsring mit einem großen Übermaß in die Nabe der Membrankupplung eingepresst und drückt die Nabe radial nach außen an die umgebende Hohlwelle an. Da die Membrankupplung mit relativ geringem Druck in die Hohlwelle eingeführt wird, kann eine Beschädigung der dünnen Membranscheibe während des Einschiebens und Eindrückens in die Hohlwelle ausgeschlossen werden. Bei dem anschließenden Einführen und Einpressen des Befestigungsrings befindet sich die Membrankupplung bereits in der vorgesehenen Endposition und muss nicht mehr verlagert oder mechanisch belastet, sondern lediglich in der vorgesehenen Endposition mit ebenfalls geringem Kraftaufwand fixiert werden, um ein Verrutschen während des Einpressens des Befestigungsrings zu verhindern.

Gemäß einer vorteilhaften Ausgestaltung des Erfindungsgedankens ist vorgesehen, dass die Membrankupplung zwei oder mehr parallel angeordnete Membranscheiben aufweist. Da sich das zu übertragende Drehmoment auf beide Membranscheiben verteilt, können die Membranscheiben wesentlich dünner ausgestaltet sein. Die dünneren Membranscheiben weisen dann eine deutlich geringere Biegesteifigkeit auf. Die Biegesteifigkeit einer aus zwei oder mehreren dünneren Membranscheiben zusammengesetzen Anordnung ist nicht nur für die einzelnen Membranscheiben, sondern auch bei einer Kombination der dünneren Membranscheiben erheblich geringer als die Biegesteifigkeit einer einzigen dickeren Membranscheibe. Weiterhin kann auch der für die Membrankupplung erforderliche Bauraum erheblich reduziert werden. Die zwei oder mehr Membranscheiben können über Dämpfungselemente miteinander gekoppelt sein.

Nachfolgend werden einige Ausführungsbeispiele einer erfindungsgemäßen Membrankupplung näher erläutert, die in der Zeichnung dargestellt sind. Es zeigt:
Figur 1 eine Draufsicht auf eine Membrankupplung mit einer ringförmigen Verdickung einer Membranscheibe,
Figur 2 eine Schnittansicht der in Figur 1 dargestellten Membrankupplung längs einer Linie II - II,
Figur 3 eine Schnittansicht einer abweichend ausgestalteten Membrankupplung mit zwei beabstandet zueinander und auf gegenüberliegenden Seiten der Membranscheiben angeordneten ringförmigen Verdickungen,
Figur 4 eine wiederum abweichend ausgestaltete Membrankupplung, bei der die Membranscheibe aus zwei Ringscheiben zusammengesetzt ist, die mit einer zweischnittigen Verbindung miteinander verfügt sind,
Figur 5 eine vergrößerte Darstellung eines Fügebereichs V in Figur 4,
Figur 6 eine schematische Darstellung einer aus mehreren zusammengesetzten Kreissektorsegmenten hergestellten Membranscheibe, und
Figur 7 eine schematische Schnittansicht einer Membrankupplung, die an einem Ende einer Hohlwelle festgelegt ist.

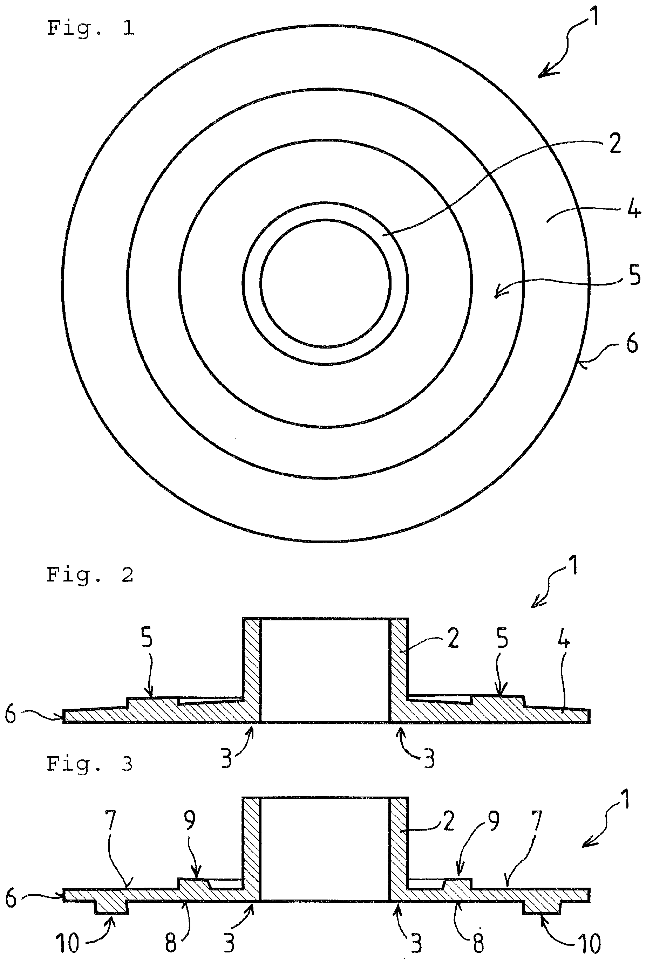

In den Figuren 1 und 2 ist schematisch eine Membrankupplung 1 abgebildet, die einstückig aus einem faserverstärkten Kunststoffmaterial hergestellt ist. Die Membrankupplung 1 weist eine rohrförmige Nabe 2 und eine an einer Stirnseite 3 der Nabe 2 angeordnete Membranscheibe 4 auf. Auf der Membranscheibe 4 ist eine ringförmige Verdickung 5 ausgebildet, die ein Verstärkungselement bildet und die Beulsteifigkeit der Membranscheibe 4 trotz des geringen zusätzlichen Materials erheblich verbessert.

Die ringförmige Verdickung 5 ist auf der Membranscheibe 4 radial etwa mittig zwischen der Nabe 2 und einer Außenumfangskante 6 angeordnet. Die Biegebeanspruchung der Membranscheibe 4 während der Ausgleichsverformungen bei Drehbewegungen ist in einem mittigen Bereich üblicherweise sehr gering. Die ringförmige Verdickung 5 beeinflusst und erhöht deshalb die Biegesteifigkeit der Membranscheibe 4 kaum.

Es kann für einzelne Verwendungszwecke oder bauraumbedingte Randbedingungen vorteilhaft sein, an Stelle von einer einseitigen und mittig angeordneten Verdickung 5, wie sie bei dem in den Figuren 1 und 2 gezeigten Ausführungsbeispiel verwirklicht ist, auf jeder Außenseite 7, 8 der Membranscheibe 4 jeweils eine rotationssymmetrische und damit ringförmige Verdickung 9, 10 auszubilden. Die beiden ringförmigen Verdickungen 9, 10 können einen voneinander abweichenden Abstand zur Nabe 2, bzw. zu der Außenumfangskante 6 aufweisen. Die ringförmigen Verdickungen 9, 10 können auch unterschiedliche Abmessungen, bzw. Massen aufweisen, so dass gezielt die Beulsteifigkeit, die Biegefestigkeit und die Dämpfungswirkung der Membrankupplung 1 beeinflusst werden können.

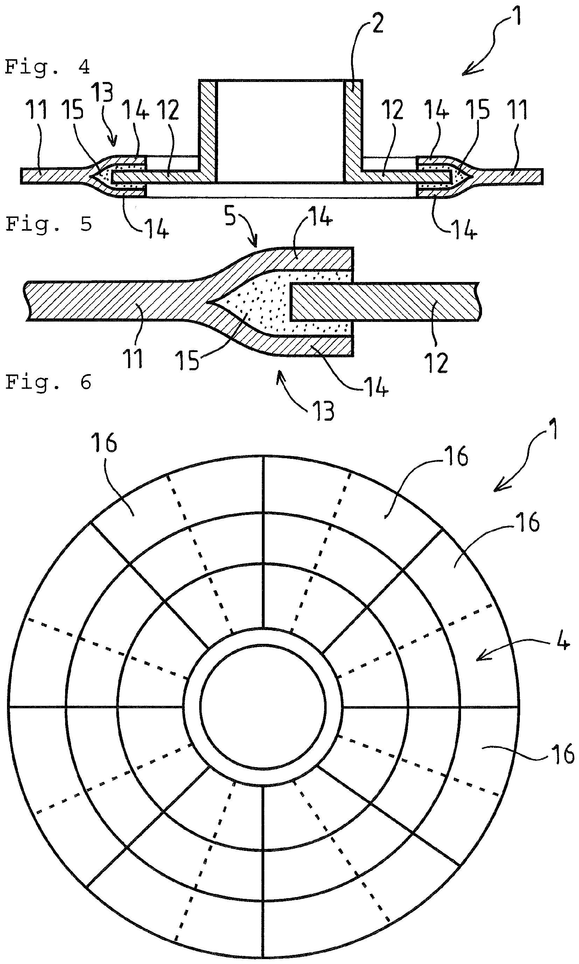

In vorteilhafter Weise kann die Membranscheibe 4 durch zwei ringscheibenförmige Membranscheibenteile 11, 12 zusammengesetzt werden, wie es schematisch in den Figuren 4 und 5 dargestellt ist. Das außen angeordnete Membranscheibenteil 11 weist in das Kunststoff-Matrixmaterial eingebettete Glasfasern auf. Das innen angeordnete Membranscheibenteil 12 weist in das Kunststoff-Matrixmaterial eingebettete Kohlenstofffasern auf.

Das außen angeordnete Membranscheibenteil 11 ist in einem Verbindungsbereich 13 in zwei Befestigungszungen 14 aufgeteilt, die das innen angeordnete Membranscheibenteil 12 auf beiden Seiten 7, 8 umgibt. In dem Verbindungsbereich 13 ist das Membranscheibenteil 11 mit einem elastischen Klebematerial 15 mit dem innen angeordneten Membranscheibenteil 12 verklebt. Durch die Überlappung des außen angeordneten Membranscheibenteils 11 mit dem innen angeordneten Membranscheibenteil 12 in dem Verbindungsbereich 13 wird eine zweischnittige Verbindung und eine ringförmige Verdickung 5 gebildet, die sowohl als Verstärkungselement wirkt als auch vorteilhafte Dämpfungseigenschaften aufweist.

Die Membranscheibe 4 ist aus mehreren in axialer Richtung gestapelten Lagen von Prepregs 16 hergestellt. Die kreissegmentförmig vorgefertigten Prepregs 16 sind nahtlos aneinandergefügt und bilden jeweils eine durchgehende, im Wesentlichen spaltfrei zusammengesetzte Lage. Die Fügestellen von in axialer Richtung benachbarten Lagen weisen einen Winkelversatz zueinander auf, so dass keine durchgehenden Schwächungslinien entstehen. Die Ränder einer oberen Lage von kreissegmentförmigen Prepregs 16 sind in Figur 6 mit durchgezogenen Linien dargestellt, während die Ränder einer darunter befindlichen Lage von Prepregs 16 gestrichelt angedeutet sind.

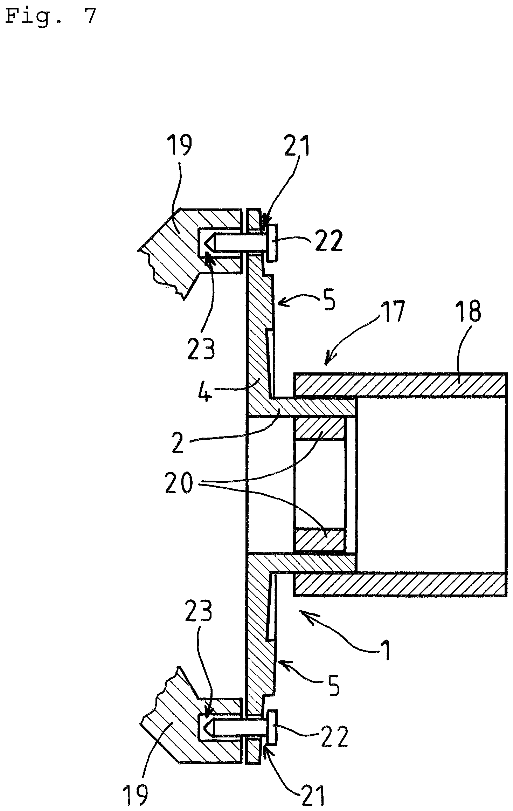

In Figur 7 ist schematisch eine mögliche Befestigung der Membrankupplung 1 an einem Endbereich 17 einer Hohlwelle 18 und an einem gegenüberliegenden Befestigungsflansch 19 gezeigt. Die Hohlwelle 18 und der Befestigungsflansch 19 sind jeweils Bestandteil einer nicht näher dargestellten Antriebseinrichtung. Die Hohlwelle 18 und der Befestigungsflansch 19 können während des Betriebs der Antriebseinrichtung einen sich dynamisch verändernden axialen Versatz und einen sich ebenfalls dynamisch verändernden Winkelversatz relativ zueinander aufweisen.

Um eine Beschädigung der Membrankupplung 1 und insbesondere der dünnen Membranscheibe 4 während der Festlegung an der Hohlwelle 18 zu vermeiden weist die rohrförmige Nabe 2 der Membrankupplung 1 lediglich ein geringes Übermaß zu der Hohlwelle 18 auf, so dass der Außendurchmesser der Nabe 2 lediglich geringfügig größer als der Innendurchmesser der Hohlwelle 18 ist. Die Membrankupplung 1 kann deshalb mit einem vergleichsweise geringen axial gerichteten Druck in den Endbereich 17 der Hohlwelle 18 eingeschoben werden.

Um die bereits in der vorgesehenen Endposition angeordnete Membrankupplung 1 relativ zu der Hohlwelle 18 zu fixieren und momentenübertragend festzulegen wird anschließend ein Befestigungsring 20 von der Stirnseite 3 her in die Nabe 2 eingeschoben, bzw. eingepresst. Der Befestigungsring 20 weist ein großes Übermaß zu der Nabe 2 der Membrankupplung 1 auf, so dass die Nabe 2 durch den Befestigungsring 20 radial nach außen an den umgebenden Endbereich 17 der Hohlwelle 18 angepresst und dadurch kraftschlüssig mit der Hohlwelle 18 verbunden ist.

Die Membranscheibe 4 weist entlang der Außenumfangskante 6 in Umfangsrichtung beabstandet mehrere Bohrungen 21 auf. Durch die Bohrungen 21 hindurch können Befestigungsbolzen 22 eingeführt und in daran angepassten Sackbohrungen 23 mit einem Gewinde in dem Befestigungsflansch 19 eingedreht werden, um die Membranscheibe 4 an dem Befestigungsflansch 19 festzulegen. Es ist für viele Anwendungsfälle nicht notwendig, dass die Membrankupplung 1 entlang der Außenumfangskante 6 einen eigenen Befestigungsflansch aufweist.

## Patentansprüche

1. Membrankupplung (1) zur Übertragung eines Drehmoments und zum Ausgleich eines Axial-, Radial- und/oder Winkelversatzes zwischen An- und Abtriebselementen mit einer rohrförmigen Nabe (2) und mit einer stirnseitig anschließenden Membranscheibe (4), wobei die Nabe (2) und die Membranscheibe (4) aus einem faserverstärkten Kunststoffmaterial bestehen, und wobei an der Membranscheibe (4) radial beabstandet von der Nabe (2) und von einer Außenumfangskante (6) mindestens ein Verstärkungselement angeordnet ist, **dadurch gekennzeichnet, dass** das Verstärkungselement eine ringförmige Verdickung (5) der Membranscheibe (4) ist.

2. Membrankupplung (1) nach Anspruch 1, **dadurch gekennzeichnet**, das auf beiden Seiten der Membranscheibe (4) jeweils mindestens eine ringförmige Verdickung (9, 10) ausgebildet ist.

3. Membrankupplung (1) nach einem der vorgehenden Ansprüche, **dadurch gekennzeichnet, dass** die Membranscheibe (4) einen kohlenstofffaserverstärkten Innenbereich und einen glasfaserverstärkten Außenbereich aufweisen.

4. Membrankupplung (1) nach einem der vorgehenden Ansprüche, **dadurch gekennzeichnet, dass** in der Membranscheibe (4) momentenübertragende Fasern eingelagert sind, die eine Orientierung von näherungsweise 45° zu einer Radiuslinie aufweisen.

5. Membrankupplung (1) nach einem der vorangehenden Ansprüche, **dadurch gekennzeichnet, dass** in der Membranscheibe (4) Fasern eingelagert sind, deren Ausrichtung deutlich von einer für die Momentenübertragung bevorzugten Orientierung von näherungsweise 45° zu einer Radiuslinie abweicht.

6. Membrankupplung (1) nach einem der vorangehenden Ansprüche, **dadurch gekennzeichnet, dass** in der Membranscheibe (4) zumindest ein überwiegender Anteil von Fasern eingelagert ist, die eine Orientierung zwischen 45° und 90° zu einer Radiallinie aufweisen.

7. Membrankupplung (1) nach einem der vorangehenden Ansprüche, **dadurch gekennzeichnet, dass** die Membranscheibe (4) mehrere zusammengesetzte Kreissektorsegmente aufweist.

8. Membrankupplung (1) nach einem der vorangehenden Ansprüche, **dadurch gekennzeichnet, dass** die Membranscheibe (4) mehrere zusammengesetzte Ringsegmente aufweist.

9. Membrankupplung (1) nach einem der Ansprüche 7 oder 8, **dadurch gekennzeichnet, dass** die Membranscheibe (4) aus mehreren nahtlos aneinandergefügten Segmenten besteht.

10. Membrankupplung (1) nach einem der vorangehenden Ansprüche, **dadurch gekennzeichnet, dass** die Membranscheibe (4) mehreren Lagen von kreisförmigen Segmenten aufweist, die jeweils eine unidirektionale Ausrichtung der Fasern aufweisen.

11. Membrankupplung (1) nach einem der vorangehenden Ansprüche, **dadurch gekennzeichnet, dass** die Membranscheibe (4) mindestens ein Dämpfungselement aufweist.

12. Membrankupplung (1) nach Anspruch 11, **dadurch gekennzeichnet, dass** das Dämpfungselement eine die Membranscheibe (4) bedeckende Dämpfungsscheibe aus einem elastischen Material ist.

13. Membrankupplung (1) nach Anspruch 11, **dadurch gekennzeichnet, dass** das Dämpfungselement eine längs eines Umfangs verlaufende Fügeverbindung mit einem elastischen Material ist.

14. Membrankupplung (1) nach Anspruch 13, **dadurch gekennzeichnet, dass** die Fügeverbindung eine zweischnittige Verbindung ist.

15. Membrankupplung (1) nach einen der Ansprüche 11 bis 14, **dadurch gekennzeichnet, dass** die Membranscheibe (4) mit einer dämpfenden Fügeverbindung mit der rohrförmigen Nabe (2) verbunden ist.

16. Membrankupplung (1) nach einem der vorangehenden Ansprüche, **dadurch gekennzeichnet, dass** die Membrankupplung (1) längs einer Außenumfangskante (6) Ausnehmungen zum Verbinden mit einem An- oder Abtriebselement aufweist.

17. Membrankupplung (1) nach einem der vorangehenden Ansprüche, **dadurch gekennzeichnet, dass** die Membrankupplung (1) zwei oder mehr parallel angeordnete Membranscheiben (4) aufweist.

## Claims

1. A membrane coupling (1) for the transmission of a torque and for compensating an axial, radial and/or angular offset between drive element and output element with a tubular hub (2) and with a membrane disc (4) adjoining at the front-side, wherein the hub (2) and the membrane disc (4) consist of a fiber-reinforced plastic material, and wherein at least one reinforcing element is arranged on the membrane disc (4) radially spaced from the hub (2) and from an outer circumferential edge (6), **characterized in that** the reinforcing element is an annular thickening (5) of the membrane disc (4).

2. The membrane coupling (1) according to claim 1, **characterized in that** in each case at least one annular thickening (9, 10) is formed on both sides of the membrane disc (4).

3. The membrane coupling (1) according to one of the preceding claims, **characterized in that** the membrane disc (4) comprises a carbon-fiber reinforced interior region and a glass-fiber reinforced outside region.

4. The membrane coupling (1) according to one of the preceding claims, **characterized in that** moment-transmitting fibers are embedded in the membrane disc (4) which have an orientation of approximately 45° to a radius line.

5. The membrane coupling (1) according to one of the preceding claims, **characterized in that** fibers are embedded in the membrane disc (4), the orientation of which fibers clearly deviates from an orientation of approximately 45° relative to a radius line preferred for transmitting the moment.

6. The membrane coupling (1) according to one of the preceding claims, **characterized in that** at least a major part of fibers is embedded in the membrane disc (4), which have an orientation between 45° and 90° relative to a radial line.

7. The membrane coupling (1) according to one of the preceding claims, **characterized in that** the membrane disc (4) comprises multiple joined segments of circular sectors.

8. The membrane coupling (1) according to one of the preceding claims, **characterized in that** the membrane disc (4) comprises multiple joined ring segments.

9. The membrane coupling (1) according to one of claims 7 or 8, **characterized in that** the membrane disc (4) consists of multiple seamlessly-joined segments.

10. The membrane coupling (1) according to one of the preceding claims, **characterized in that** the membrane disc (4) comprises multiple layers of circular segments, which each have a unidirectional orientation of the fibers.

11. The membrane coupling (1) according to one of the preceding claims, **characterized in that** the membrane disc (4) comprises at least one damper element.

12. The membrane coupling (1) according to claim 11, **characterized in that** the damper element is a damper disc made of an elastic material that covers the membrane disc (4) .

13. The membrane coupling (1) according to claim 11, **characterized in that** the damper element is a join connection with an elastic material that runs along a circumference.

14. The membrane coupling (1) according to claim 13, **characterized in that** the join connection is a two-shear connection.

15. The membrane coupling (1) according to one of claims 11 to 14, **characterized in that** the membrane disc (4) is connected to the tubular hub (2) with a damping join connection.

16. The membrane coupling (1) according to one of the preceding claims, **characterized in that** the membrane coupling (1) comprises cut-outs along an outer circumferential edge (6) for connection with a drive element or output element.

17. The membrane coupling (1) according to one of the preceding claims, **characterized in that** the membrane coupling (1) comprises two or more parallelly-arranged membrane discs (4).

## Revendications

1. Accouplement à membrane (1) pour transmettre un couple et pour compenser un décalage axial, radial et/ou angulaire entre des éléments d'entrée et de sortie, comprenant un moyeu de forme tubulaire (2) et un disque à membrane (4) frontal adjacent, dans lequel lesdits moyeu (2) et disque à membrane (4) consistent en une matière plastique renforcée de fibres, et au moins un élément de renforcement étant disposé sur le disque à membrane (4) espacé radialement par rapport au moyeu (2) et à un bord circonférentiel extérieur (6), **caractérisé en ce que** l'élément de renforcement est un renflement de forme annulaire (5) du disque à membrane (4).

2. Accouplement à membrane (1) selon la revendication 1, **caractérisé en ce qu'**au moins un renflement de forme tubulaire (9, 10) est formé des deux côtés du disque à membrane (4).

3. Accouplement à membrane (1) selon l'une quelconque des revendications précédentes, **caractérisé en ce que** le disque à membrane (4) présente une région interne renforcée de fibres de carbone et une région externe renforcée de fibres de verre.

4. Accouplement à membrane (1) selon l'une quelconque des revendications précédentes, **caractérisé en ce que** des fibres transmetteuses de couple, qui présentent une orientation d'approximativement 45° par rapport à une ligne radiale, sont entreposées dans le disque à membrane (4) .

5. Accouplement à membrane (1) selon l'une quelconque des revendications précédentes, **caractérisé en ce que** des fibres dont l'orientation diffère sensiblement d'une orientation privilégiée pour la transmission de couple, c'est-à-dire d'approximativement 45° par rapport à une ligne radiale, sont entreposées dans le disque à membrane (4) .

6. Accouplement à membrane (1) selon l'une quelconque des revendications précédentes, **caractérisé en ce que** le disque à membrane (4) contient au moins une part prépondérante de fibres qui présentent une orientation comprise entre 45 et 90° par rapport à une ligne radiale.

7. Accouplement à membrane (1) selon l'une quelconque des revendications précédentes, **caractérisé en ce que** le disque à membrane (4) comporte plusieurs segments à secteur circulaire assemblés.

8. Accouplement à membrane (1) selon l'une quelconque des revendications précédentes, **caractérisé en ce que** le disque à membrane (4) comprend plusieurs segments annulaires assemblés.

9. Accouplement à membrane (1) selon l'une des revendications 7 ou 8, **caractérisé en ce que** le disque à membrane (4) consiste en plusieurs segments assemblés les uns avec les autres sans soudure.

10. Accouplement à membrane (1) selon l'une quelconque des revendications précédentes, **caractérisé en ce que** le disque à membrane (4) comprend plusieurs couches de segments de forme circulaire qui présentent respectivement une orientation unidirectionnelle des fibres.

11. Accouplement à membrane (1) selon l'une quelconque des revendications précédentes, **caractérisé en ce que** le disque à membrane (4) comprend au moins un élément amortisseur.

12. Accouplement à membrane (1) selon la revendication 11, **caractérisé en ce que** l'élément amortisseur est un disque amortisseur en matière élastique qui recouvre le disque à membrane (4).

13. Accouplement à membrane (1) selon la revendication 11, **caractérisé en ce que** l'élément amortisseur est un assemblage par aboutement avec une matière élastique s'étirant le long d'une circonférence.

14. Accouplement à membrane (1) selon la revendication 13, **caractérisé en ce que** l'assemblage par aboutement est un assemblage à double section.

15. Accouplement à membrane (1) selon l'une quelconque des revendications 11 à 14, **caractérisé en ce que** le disque à membrane (4) est relié au moyeu de forme tubulaire (2) avec un assemblage par aboutement amortisseur.

16. Accouplement à membrane (1) selon l'une quelconque des revendications précédentes, **caractérisé en ce que** l'accouplement à membrane (1) comprend le long d'un bord circonférentiel extérieur (6) des évidements pour un raccordement avec un élément d'entrainement ou un élément de sortie.

17. Accouplement à membrane (1) selon l'une quelconque des revendications précédentes, **caractérisé en ce que** l'accouplement à membrane (1) comprend deux disques à membrane ou plus disposés parallèlement (4).
